# EUROPÄISCHE PATENTSCHRIFT

(11) **EP 1 986 072 B1**
(45) Veröffentlichungstag und Bekanntmachung des Hinweises auf die Patenterteilung: **25.11.2009**
(21) Anmeldenummer: 08004797.0
(22) Anmeldetag: 14.03.2008
(51) Int. Cl.: G06F 1/16

(54) **Tragbarer Digitalcomputer**
Portable digital computer
Ordinateur numérique portatif

(30) Priorität: 25.04.2007 DE 102007019840; 23.06.2007 DE 102007028995
(43) Veröffentlichungstag der Anmeldung: 29.10.2008
(73) Patentinhaber: Walter, Henning, 22087 Hamburg (DE)
(72) Erfinder: Walter, Henning, 22087 Hamburg (DE); Stoltz, Waltraut, 22087 Hamburg (DE)
(74) Vertreter: Eisenführ, Speiser & Partner

(56) Entgegenhaltungen:
- US-A1- 2004 108 968
- US-A1- 2004 259 593
- US-A1- 2006 056 143
- US-B1- 6 205 021
- US-B1- 6 480 373
- US-B1- 6 707 666

## Beschreibung

Die Erfindung bezieht sich auf einen tragbaren Digitalcomputer mit einem Gehäuse, an dem eine Tastatur, eine abnehmbare Maus und ein mit Hilfe eines Scharniers verschwenkbarer Bildschirm, und in dem Akkumulatoren untergebracht sind.

Es ist ein Eingabegerät für portable Digitalcomputer bekannt (DE 103 30 771 A1). Die üblicherweise bei einem solchen Digitalcomputer eingesetzte sog. Funkmaus ist in einer Aussparung des Gehäuses so untergebracht, dass sie herausgezogen werden und separat von dem Gehäuse, der Tastatur und dem Bildschirm eingesetzt werden kann, so als ob es sich bei dem bekannten Digitalcomputer um einen solchen handelt, der über eine separate Maus verfügt.

Bei der vorliegenden Erfindung soll ausgehend von diesem Stand der Technik der Bedienungskomfort noch weiter erhöht werden, was bei einem tragbaren Digitalcomputer der eingangs genannten Art dadurch erreicht wird, dass das Gehäuse zweiteilig ausgebildet ist; die beiden Gehäuseteile über ein weiteres zum ersten Scharnier paralleles Scharnier verschwenkbar sind; die Tastatur vom Gehäuse abnehmbar ist; hinter dem Bildschirm ein CD-ROM-Abspielgerät und ein Datenprozessor untergebracht sind; die beiden Gehäuseteile aufeinander legbar ausgebildet sind und als Unterbau für den Bildschirm dienen und dass am Bildschirm eine Mehrzahl von Anschlussbuchsen angeordnet ist.

Der Digitalcomputer gemäß der Erfindung ist in mehrere räumliche trennbare Untereinheiten aufgegliedert. Im eigentlichen Gehäuse, an dem üblicherweise bei bekannten Rechnern die Tastatur angebracht ist, ist die Energieversorgung enthalten, also die Akkumulatoren. Das Gehäuse selbst besteht dann aus zwei Teilen, die zueinander verschwenkbar sind. In der einen Position können diese Teile nebeneinander in gestreckter Lage auf eine Unterlage gelegt werden. In er anderen Positionen können diese Gehäuseteile aufeinander gelegt und vom Benutzer weg verschwenkt werden.

Der Bildschirmteil ist an seiner dem Benutzer abgewandten Seite u. a. mit dem CD-ROM-Abspielgerät ausgestaltet, so dass die Mehrteiligkeit des eigentlichen Gehäuses, in dem normalerweise ein solches Gerät untergebracht ist, kein Problem bereitet.

Die Tastatur kann von dem Gehäuse - und damit auch von dem Bildschirm - beliebig weit entfernt werden. Das gleiche trifft für die Maus zu. Selbstverständlich sind diese Teile funktionell in der üblichen Art und Weise miteinander und mit dem Prozessor verbunden.

Der Vorteil des Digitalcomputers gemäß der Erfindung ist vor allem darin zu sehen, dass er einerseits so transportiert werden kann wie ein üblicher Digitalcomputer, nämlich in einer flachen in eine Aktentasche passenden Form, wohingegen die Möglichkeit besteht, die einzelnen Teile des Computers weit genug voneinander zu entfernen, so dass je nach den Bedürfnissen der Bedienungsperson der Bildschirm ins rechte Licht gesetzt werden kann und die Bedienungselemente ergonomisch leicht zu erreichen sind.

Weitere Ausführungsformen der Erfindung sind dadurch geprägt,
dass der Bildschirm zusätzlich um eine im Wesentlichen vertikale Achse drehbar ist,
dass in einem der Gehäuseteile ein Drucker untergebracht ist ,
dass das Rechenfeld des Digitalcomputers an einem von einem der Gehäuseteile abnehmbaren Teil ausgebildet ist und
dass der Teil seitlich an der Tastatur anbringbar ist.

Die Erfindung wird nachstehend anhand der Zeichnung beispielsweise erläutert.

Figuren 1 bis 4 zeigen schaubildliche Ansichten von Digitalcomputern gemäß der Erfindung in unterschiedlichen Positionen.

Fig. 5 zeigt einen Digitalcomputer gemäß der Erfindung mit einem Drucker.

Figuren 6 und 7 zeigen ein abnehmbares Rechenfeld von Digitalcomputern gemäß der Erfindung in unterschiedlichen Lagen.

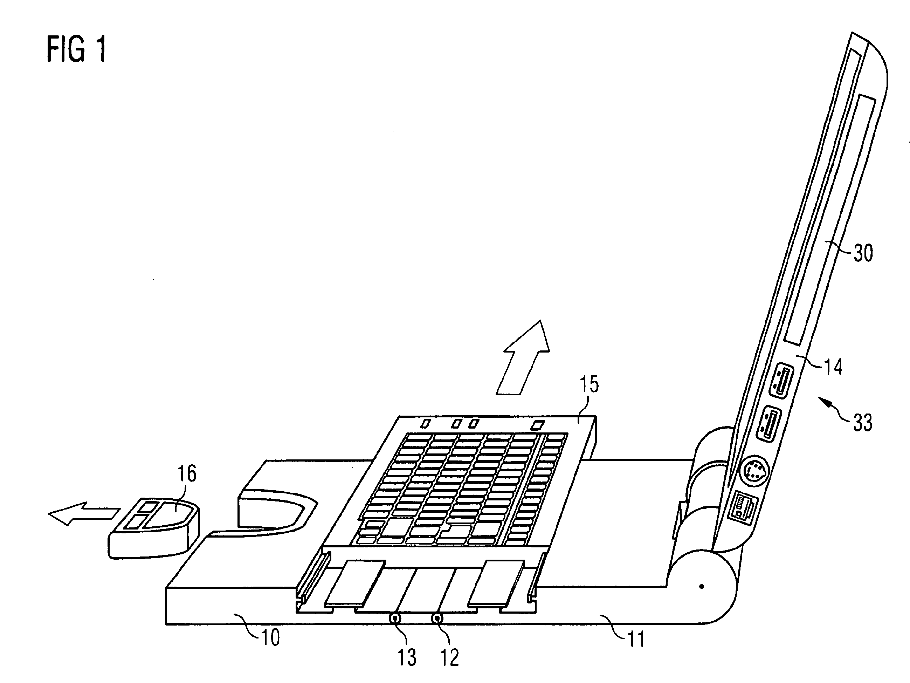

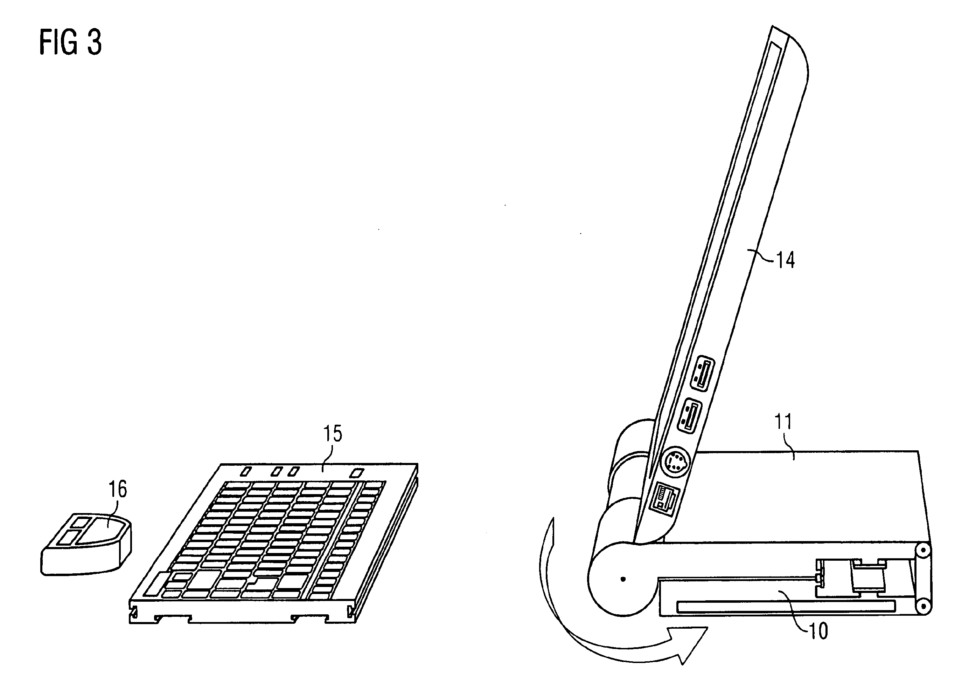

In den Figuren 1 bis 5 ist das Gehäuse des Computers mit zwei Gehäuseteilen 10 und 11 gezeigt. Im Inneren des Gehäuseteils 10 befinden sich die relativ schweren Akkumulatoren, diese könnten aber auch zum Teil im Gehäuseteil 11 untergebracht sein.

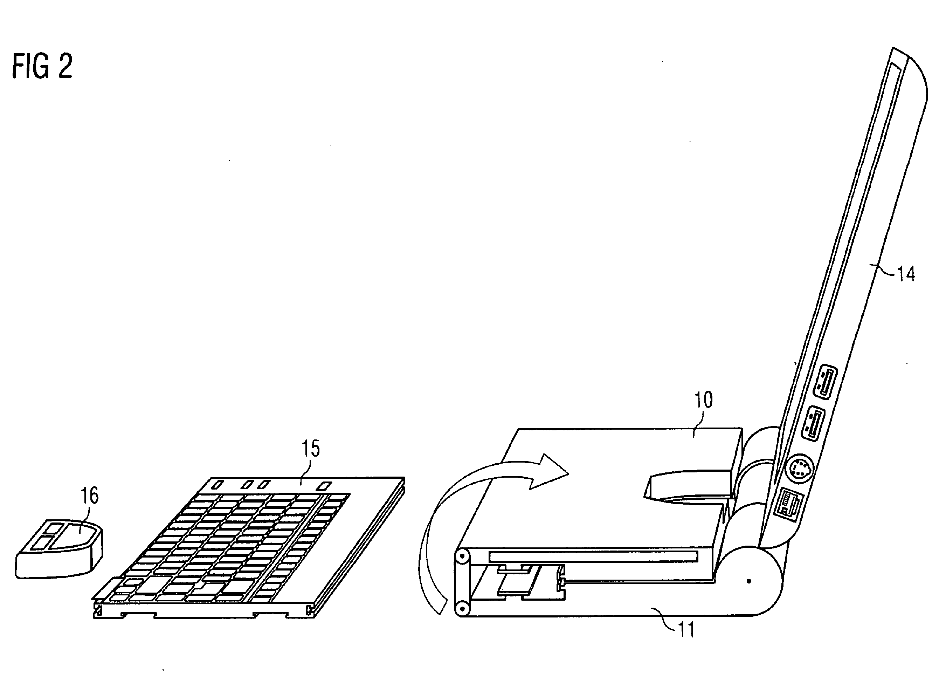

Die Gehäuseteile 10 und 11 sind über Schwenkgelenke oder Scharniere 12 und 13 gelenkig miteinander verbunden, so dass sie aus der in Figur 1 gezeigten gestreckten Lage ohne weiteres in die in den Figuren 2 bis 5 gezeigten Lagen gebracht werden können.

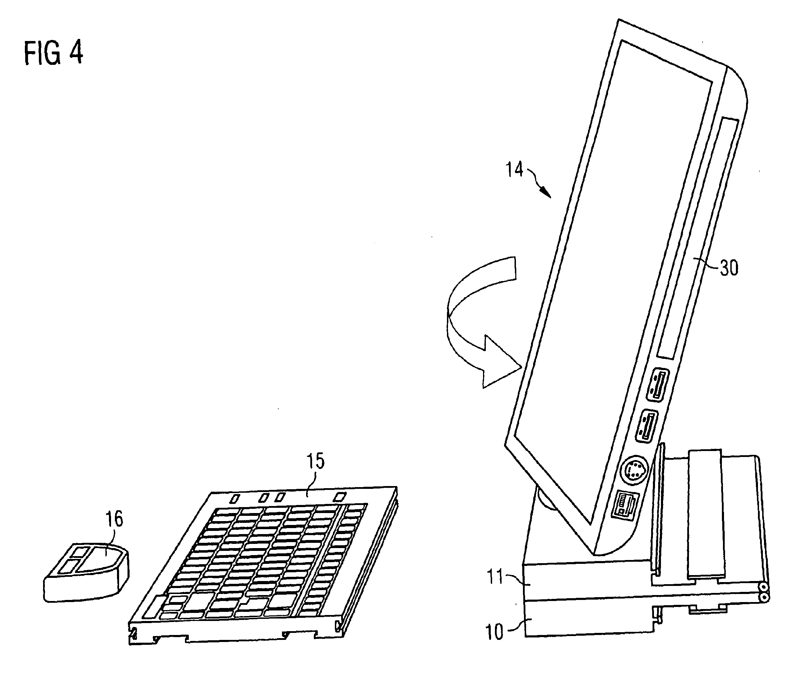

Ein Bildschirm ist mit 14 bezeichnet. Dieser Bildschirm 14 ist über ein Scharnier mit dem Gehäuse 10 oder 11 verbunden und kann daher in die geeignete Lage gebracht werden. In der Ausführungsform nach Fig. 4 ist der Bildschirm 14 zusätzlich um eine vertikale Achse verstellbar.

Die Gehäuseteile 10 und 11 sind mit Aussparungen so ausgebildet, dass die Tastatur 15 dort ein- und ausgeschoben werden kann. Das gleiche trifft für die Maus bzw. Funkmaus 16 mit ihrem Touchpad zu, die von dem Gehäuseteil 10 getrennt werden kann.

Mit 30 ist in den Figuren 1 und 4 der Einschub für eine CD-ROM eines CD-ROM-Abspielgerätes bezeichnet, und diese Figuren lassen erkennen, dass das CD-ROM-Abspielgerät sich hinter dem Bildschirm 14 befindet.

Mit 33 ist in der Fig. 1 eine Mehrzahl von Buchsen der üblicherweise bekannten Art bezeichnet, so dass zusätzliche Einrichtungen mit dem Digitalcomputer gemäß der Erfindung funktionsmäßig verbunden werden können. Diese Buchsen befinden sich ebenfalls am Bildschirmteil 14 des Digitalcomputers gemäß der Erfindung.

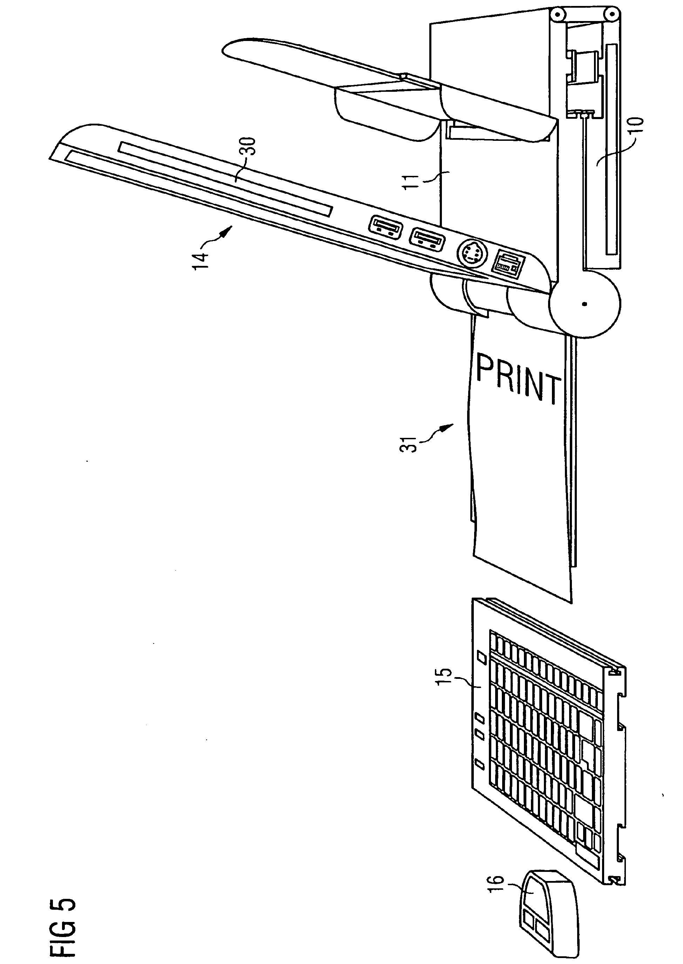

Fig. 5 zeigt eine Sonderbauform des Digitalcomputers gemäß der Erfindung, und zwar ist in dem einen Gehäuseteil 11 ein Drucker 31 untergebracht, wobei der Drucker selbst nicht zu erkennen ist, wohl aber die Ausgabe des bedruckten Papiers und die Eingabe für das zu druckende Papier.

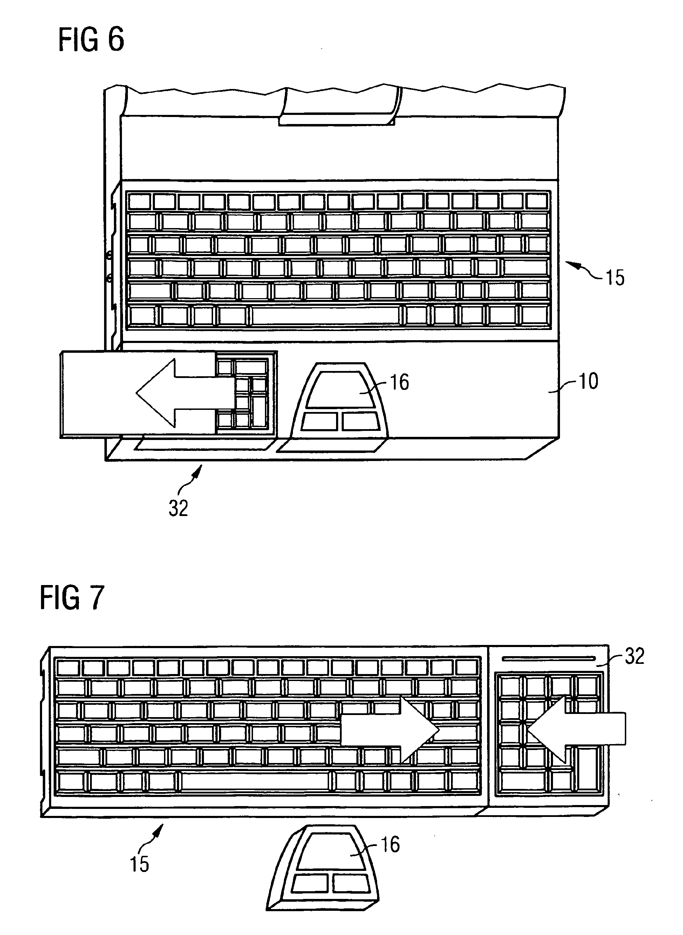

In den Figuren 6 und 7 ist der Gehäuseteil 10 mit einer Aussparung versehen, in der sich das sog. Rechenfeld 32 befindet. Ein Pfeil deutet an, dass ein Deckel zur Seite geschoben werden und dieser Teil 32 mit dem Rechenfeld dort entnommen werden kann. In einer bevorzugten Ausführungsform, die Fig. 7 zeigt, kann dieses Rechenfeld 32 seitlich an der Tastatur 15 befestigt werden, wie dies von Arbeitskonsolen bekannt ist. Auf diese Art und Weise kann mit dem Digitalcomputer auch in der üblichen Art und Weise gearbeitet werden und insbesondere Rechenvorgänge ausgeführt werden.

Aus Fig. 1 ist am besten zu erkennen, dass die Tastatur 15 mit Ausnehmungen ausgestaltet ist, die wiederum mit Vorsprüngen an den Gehäuseteilen 10 und 11 zusammenwirken, und zwar in der Art von Nut-Feder-Verbindungen. Dadurch ergibt sich im zusammengebauten Zustand, in dem sich die Tastatur 15 an den Gehäuseteilen 10 und 11 in eingeschobenem Zustand befindet, eine Stabilisierung des aus den beiden Gehäuseteilen 10 und 11 gebildeten Gehäuses, was insbesondere im Transportzustand vorteilhaft ist.

Die in dein einzelnen Figuren gezeigten Pfeile lassen erkennen, wie einerseits bestimmte Teile aus dem Gehäuse herausgenommen werden können und andererseits, in welcher Weise die Gehäuseteile 10 und 11 verschwenkt werden können, so dass diese unterschiedliche Arbeitslagen einnehmen können.

## Patentansprüche

1. Tragbarer Digitalcomputer mit einem Gehäuse, an dem eine Tastatur, eine abnehmbare Maus und ein mit Hilfe eines Scharniers verschwenkbarer Bildschirm und in dem Akkumulatoren untergebracht sind, **dadurch gekennzeichnet, dass** das Gehäuse (10, 11) zweiteilig ausgebildet ist; die beiden Gehäuseteile über ein weiteres zum ersten Scharnier paralleles Scharnier (12,13) verschwenkbar sind; die Tastatur (15) vom Gehäuse abnehmbar ist; hinter dem Bildschirm (14) ein CD-ROM-Abspielgerät (30) und ein Datenprozessor untergebracht sind; die beiden Gehäuseteile (10,11) aufeinander legbar ausgebildet sind und als Unterbau für den Bildschirm (14) dienen und dass am Bildschirm eine Mehrzahl von Anschlussbuchsen (33) angeordnet ist.

2. Digitalcomputer nach Anspruch 1, **dadurch gekennzeichnet, dass** der Bildschirm (14) zusätzlich um eine im Wesentlichen vertikale Achse drehbar ist (Fig. 4).

3. Digitalcomputer nach einem der Ansprüche 1 oder 2, **dadurch gekennzeichnet, dass** in einem der Gehäuseteile (10, 11) ein Drucker (31) untergebracht ist (Fig. 5).

4. Digitalcomputer nach einem der Ansprüche 1 bis 3, **dadurch gekennzeichnet, dass** das Rechenfeld des Digitalcomputers an einem von einem der Gehäuseteile (10, 11) abnehmbaren Teil (32) ausgebildet ist (Fig. 6).

5. Digitalcomputer nach Anspruch 4, **dadurch gekennzeichnet, dass** der Teil (32) seitlich an der Tastatur (15) anbringbar ist (Fig. 7).

## Claims

1. Portable digital computer with a housing, on which a keyboard, a detachable mouse and a monitor which can be pivoted with the aid of a hinge are accommodated and in which batteries are housed, **characterised in that** the housing (10, 11) comprises two parts; the two housing parts can be pivoted by means of another hinge (12, 13) parallel with the first hinge; the keyboard (15) can be detached from the housing; a CD ROM player (30) and a data processor are housed behind the monitor (14); the two housing parts (10, 11) are designed so that they can be laid one on top of the other and serve as a base for the monitor (14) and a plurality of connector sockets (33) is provided on the monitor.

2. Digital computer as claimed in claim 1, **characterised in that** the monitor (14) can also be rotated about an essentially vertical axis (Fig. 4).

3. Digital computer as claimed in one of claims 1 or 2, **characterised in that** a printer (31) is housed in one of the housing parts (10, 11) (Fig. 5).

4. Digital computer as claimed in one of claims 1 to 3, **characterised in that** the calculator keypad of the digital computer is disposed on a part (32) which can be removed from one of the housing parts (10, 11) (Fig. 6).

5. Digital computer as claimed in claim 4, **characterised in that** the part (32) can be attached to the side of the keyboard (15) (Fig. 7).

## Revendications

1. Ordinateur numérique portatif comprenant un boîtier sur lequel sont disposés un clavier, une souris amovible et un écran pouvant être basculé au moyen d'une charnière, et dans lequel sont disposés des accumulateurs, **caractérisé en ce que** le boîtier (10, 11) est réalisé en deux parties ; **en ce que** les deux parties du boîtier peuvent être basculées par l'intermédiaire d'une charnière supplémentaire (12, 13) parallèle à la première charnière ; **en ce que** le clavier (15) peut être retiré du boîtier ; **en ce qu'**un lecteur de CD-ROM (30) et un processeur de données sont disposés à l'arrière de l'écran (14) ; **en ce que** les deux parties du boîtier (10, 11) sont réalisées pour prendre appui l'une sur l'autre et servent d'infrastructure pour l'écran (14), et **en ce qu'**une pluralité de prises de raccordement (33) sont disposées sur l'écran.

2. Ordinateur numérique selon la revendication 1, **caractérisé en ce que** l'écran (14) peut également pivoter autour d'un axe principalement vertical (fig. 4).

3. Ordinateur numérique selon l'une quelconque des revendications 1 ou 2, **caractérisé en ce qu'**une imprimante (31) est disposée dans une des parties du boîtier (10, 11) (fig. 5).

4. Ordinateur numérique selon l'une quelconque des revendications 1 à 3, **caractérisé en ce que** le champ de calcul de l'ordinateur numérique est réalisé sur une partie amovible (32) de l'une des parties du boîtier (10, 11) (fig. 6).

5. Ordinateur numérique selon la revendication 4, **caractérisé en ce que** la partie (32) peut être disposée sur le côté du clavier (15) (fig. 7).
